(19) Europäisches Patentamt
European Patent Office
Office européen des brevets

(11) **EP 4 693 881 A1**

(12) **EUROPÄISCHE PATENTANMELDUNG**

(43) Veröffentlichungstag:
**11.02.2026 Patentblatt 2026/07**

(21) Anmeldenummer: **24192860.5**

(22) Anmeldetag: **05.08.2024**

(51) Internationale Patentklassifikation (IPC):
***H02M 7/5387*** (2007.01) ***H02M 5/458*** (2006.01)
***H02M 1/00*** (2006.01) ***H02J 3/12*** (2026.01)

(52) Gemeinsame Patentklassifikation (CPC):
**H02M 5/4585; H02J 3/12; H02M 1/0025; H02M 7/53871**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
- **Benesch, Norbert**
  **90562 Heroldsberg (DE)**
- **Hussendörfer, Benjamin**
  **90559 Burgthann (DE)**
- **Weis, Benno**
  **91334 Hemhofen (DE)**

(74) Vertreter: **Siemens Patent Attorneys**
**Postfach 22 16 34**
**80506 München (DE)**

(54) **EFFIZIENTE ERFASSUNG DES ZUSTANDS EINES EINEN UMRICHTER SPEISENDEN VERSORGUNGSNETZES**

(57) Ein Umrichter (2) versorgt eine Last (3) aus einem Versorgungsnetz (4) mit elektrischer Energie. Eine Steuereinrichtung (9) des Umrichters (2) ermittelt unter Verwertung einer gewünschten Leistung (P1*) der Last (3) und eines Zustands (Z) des Versorgungsnetzes (4) eine von dem Umrichter (2) an die Last (3) auszugebende Leistung (P2*). Die Steuereinrichtung (9) ermittelt unter Verwertung der auszugebenden Leistung (P2*) Steuersignale (C, C1, C2) für den Umrichter (2) und steuert den Umrichter (2) mit den Steuersignalen (C, C1, C2) an, so dass der Umrichter (2) die auszugebende Leistung (P2*) an die Last (3) ausgibt. Die Steuereinrichtung (9) ermittelt den Zustand (Z) des Versorgungsnetzes (4) unter Verwertung der Ermittlung der Steuersignale (C, C1, C2) zu Grunde liegender Größen (UZK, a, f).

FIG 1

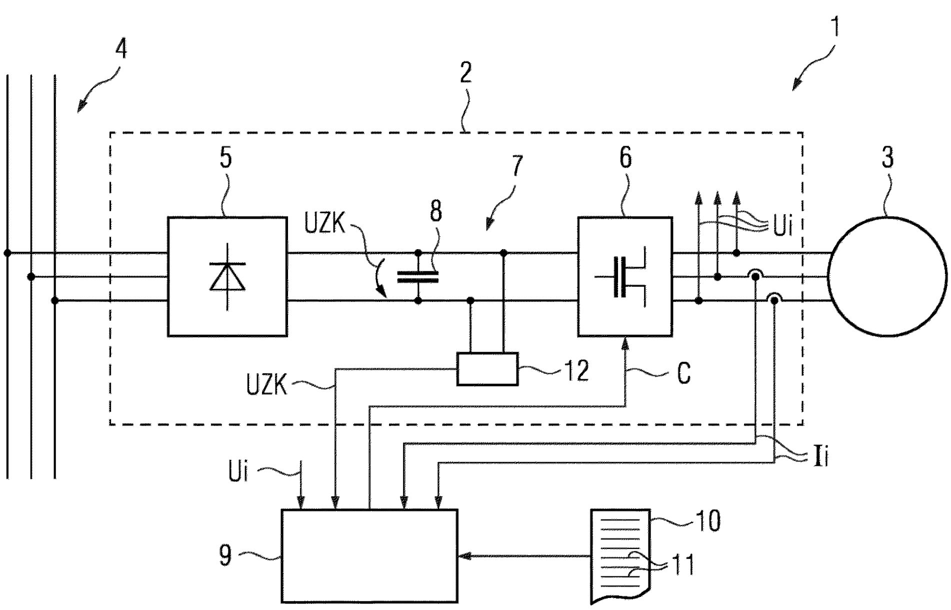


EP 4 693 881 A1

Processed by Luminess, 75001 PARIS (FR)

## Beschreibung

Die vorliegende Erfindung geht aus von einem Betriebsverfahren für eine Steuereinrichtung eines Umrichters, der eine Last aus einem Versorgungsnetz mit elektrischer Energie versorgt,

- wobei die Steuereinrichtung unter Verwertung einer gewünschten Leistung der Last und eines Zustands des Versorgungsnetzes eine von dem Umrichter an die Last auszugebende Leistung ermittelt,
- wobei die Steuereinrichtung unter Verwertung der auszugebenden Leistung Steuersignale für den Umrichter ermittelt und den Umrichter mit den Steuersignalen ansteuert, so dass der Umrichter die auszugebende Leistung an die Last ausgibt.

Die vorliegende Erfindung geht weiterhin aus von einem Steuerprogramm für eine Steuereinrichtung, welche einen Umrichter steuert, der eine Last aus einem Versorgungsnetz mit elektrischer Energie versorgt, wobei das Steuerprogramm Befehle umfasst, die bei ihrer Ausführung durch die Steuereinrichtung die Steuereinrichtung veranlassen, ein derartiges Betriebsverfahren auszuführen.

Die vorliegende Erfindung geht weiterhin aus von einer Steuereinrichtung für einen Umrichter, der eine Last aus einem Versorgungsnetz mit elektrischer Energie versorgt, wobei die Steuereinrichtung mit einem derartigen Steuerprogramm programmiert ist, so dass die Steuereinrichtung ein derartiges Betriebsverfahren ausführt.

Die vorliegende Erfindung geht weiterhin aus von einer Umrichtereinheit,

- wobei die Umrichtereinheit einen Umrichter aufweist, der eine Last aus einem Versorgungsnetz mit elektrischer Energie versorgt,
- wobei die Umrichtereinheit eine Steuereinrichtung aufweist, welche den Umrichter steuert,
- wobei die Steuereinrichtung als derartige Steuereinrichtung ausgebildet ist.

Die genannten Gegenstände sind allgemein bekannt.

Die Ausbalancierung der von Energiequellen in ein Versorgungsnetz eingespeisten elektrischen Leistung auf der einen Seite und der von Verbrauchern dem Versorgungsnetz entnommenen elektrischen Leistung auf der anderen Seite ist für den stabilen Betrieb eines Versorgungsnetzes von essenzieller Bedeutung. Kann diese Balance nicht mehr eingehalten werden, so ändern sich die Netzspannung und die Netzfrequenz des Versorgungsnetzes. Übersteigt die entnommene elektrische Leistung die eingespeiste elektrische Leistung, so zeigt sich dies in einem Absinken der Netzspannung und einem Absinken der Netzfrequenz. Im umgekehrten Fall steigen die Netzspannung und die Netzfrequenz an. Bei vielen Versorgungsnetzen zeigen sich die Auswirkungen primär in der Netzfrequenz und erst sekundär in der Netzspannung. Bei manchen Versorgungsnetzen zeigen sich die Auswirkungen jedoch primär in der Netzspannung und erst sekundär in der Netzfrequenz.

Für Umrichtereinheiten, welche die mittels erneuerbarer Energiequellen erzeugte elektrische Energie oder die in einem Energiespeicher gespeicherte elektrische Energie in ein Versorgungsnetz einspeisen, ist bekannt, auf der Netzseite Messgrößen zu erfassen und bei der Ansteuerung des Umrichters der Umrichtereinheit zu berücksichtigen. Insbesondere wird bei einem Absinken der Netzfrequenz und/oder der Netzspannung im Rahmen der Möglichkeiten der Energiequelle bzw. des Energiespeichers die von dem Umrichter in das Versorgungsnetz eingespeiste Leistung erhöht, um das Versorgungsnetz zu stabilisieren.

Für Umrichtereinheiten, welche eine Last mit elektrischer Energie versorgen, ist eine vergleichbare Vorgehensweise nicht bekannt. Hier wird im Gegenteil die - aus Sicht der versorgten Last vorteilhafte - Vorgehensweise ergriffen, dass die Spannung, der Strom und die Leistung, welche die Umrichtereinheit der Last zur Verfügung stellt, weitgehend unabhängig vom Zustand des Versorgungsnetzes sind. Dies gilt beispielsweise gleichermaßen für Frequenzumrichter, Schaltnetzteile oder unterbrechungsfreie Stromversorgungen.

Zur Verbesserung der Netzstabilität wäre es aus Sicht des Versorgungsnetzes von Vorteil, wenn Verbraucher ihre Leistungsaufnahmen reduzieren, sobald das Versorgungsnetz die von den an das Versorgungsnetz angeschlossenen Verbrauchern angeforderte Gesamtleistung nicht mehr zur Verfügung stellen kann. Hierzu sind Ansätze und Anforderungen bekannt, die derzeit in Normungsgremien diskutiert werden. Mögliche Implementierungen sind nicht bekannt.

Die Aufgabe der vorliegenden Erfindung besteht darin, Möglichkeiten zu schaffen, mittels derer der Zustand des Versorgungsnetzes auf einfache Art und Weise ermittelt werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren der eingangs genannten Art dadurch ausgestaltet, dass die Steuereinrichtung den Zustand des Versorgungsnetzes unter Verwertung der Ermittlung der Steuersignale zu Grunde liegender Größen ermittelt.

Die vorliegende Erfindung beruht auf der Erkenntnis, dass der Zustand des Versorgungsnetzes, der im Wesentlichen durch die Netzspannung und die Netzfrequenz gegeben ist, anhand von Größen ermittelt werden kann, welche die Steuereinrichtung der Ermittlung ihrer Steuersignale zu Grunde legt und die daher der Steuereinrichtung (ergänze in Gedanken: sowieso) bekannt sind. Dadurch, dass für die Ermittlung des Zustands des Versorgungsnetzes Größen verwertet werden, die der Steuereinrichtung "sowieso" bekannt sind, weil die Steuereinrichtung diese Größen für die Ermittlung der Steuersignale für den Umrichter benötigt, entfällt also ein Aufwand für anderenfalls eigenständig erforderliche Messeinrichtungen.

Es ist natürlich möglich, dass die Steuereinrichtung zur Ermittlung des Zustands des Versorgungsnetzes nicht nur eine, sondern mehrere verschiedene Größen verwertet. In diesem Fall werden vorzugsweise alle derartigen Größen auch im Rahmen der Ermittlung der Steuersignale verwertet.

In vielen Fällen weist der Umrichter zum Versorgungsnetz hin einen Gleichrichter, zur Last hin einen Wechselrichter und zwischen dem Gleichrichter und dem Wechselrichter einen Zwischenkreis auf. Meist ist es bei dieser Ausgestaltung möglich, dass die Größe eine innerhalb des Zwischenkreises erfasste Messgröße ist. Diese Vorgehensweise ist insbesondere dann anwendbar, wenn der Gleichrichter als ungesteuerter Gleichrichter ausgebildet ist, zur Gleichrichtung also Dioden verwendet werden.

Insbesondere ist es möglich, dass die Messgröße eine Zwischenkreisspannung des Zwischenkreises ist und dass die Steuereinrichtung den Zustand des Versorgungsnetzes anhand der Zwischenkreisspannung und einer von dem Umrichter an die Last ausgegebenen Leistung ermittelt. Die Zwischenkreisspannung wird üblicherweise sowieso messtechnisch erfasst, weil sie von der Steuereinrichtung benötigt wird, um den erforderlichen Aussteuergrad des Wechselrichters zu ermitteln. Die Zwischenkreisspannung ist bei einer Einspeisung über Dioden abhängig von der Spannung des Versorgungsnetzes. Sie stellt daher eine geeignete Messgröße dar, um die Netzspannung und damit den Zustand des Versorgungsnetzes zu bestimmen.

Die ausgegebene Leistung ist diejenige Leistung, die aktuell an die Last ausgegeben wird. Sie wird zur Ermittlung der Netzspannung benötigt, weil im wesentlichen die gleiche Leistung aus dem Versorgungsnetz bezogen wird und Spannungsabfälle an dem Gleichrichter und den Zuleitungen auftreten, die von der Leistung abhängig sind.

Die ausgegebene Leistung kann von der Steuereinrichtung durch Erfassung von Spannungen und Strömen ausgangsseitig des Umrichters (also zur Last hin) ermittelt werden. Aufgrund des Umstands, dass die Steuereinrichtung das Betriebsverfahren zyklisch ausführt, kann die Steuereinrichtung als aktuell an die Last ausgegebene Leistung aber auch diejenige auszugebende Leistung verwenden, die sie bei dem unmittelbar vorhergehenden Zyklus als auszugebende Leistung ermittelt hat.

Der ermittelte Zustand des Versorgungsnetzes ist im Falle der Ermittlung der Zwischenkreisspannung also die Spannung des Versorgungsnetzes. Ausgehend von der Zwischenkreisspannung wird ein Nominalwert der Netzspannung ermittelt. Dieser Nominalwert wird in Abhängigkeit der von dem Umrichter an die Last ausgegebenen Leistung korrigiert. Die Korrektur kann insbesondere proportional zu der ausgegebenen Leistung sein. Gegebenenfalls kann zusätzlich ein Offset berücksichtigt werden, der den unvermeidbaren Spannungsabfall (Durchlassspannung) an den Dioden des Gleichrichters berücksichtigt, der auch bei einer sehr kleinen Leistung bereits auftritt.

In aller Regel weist der Zwischenkreis einen Zwischenkreiskondensator auf. In diesem Fall ist es alternativ zur Ermittlung der Zwischenkreisspannung als solcher möglich, dass die Messgrö-βe zwar die Zwischenkreisspannung ist, dass die Steuereinrichtung jedoch anhand der Messgröße eine Frequenz einer Spannungswelligkeit der Zwischenkreisspannung ermittelt und den Zustand des Versorgungsnetzes anhand der ermittelten Frequenz der Spannungswelligkeit ermittelt. Der ermittelte Zustand des Versorgungsnetzes ist im Falle der Ermittlung der Frequenz der Spannungswelligkeit die Frequenz des Versorgungsnetzes.

Bei einem üblichen Umrichter, dessen Gleichrichter zu den üblichen drei Phasen des Versorgungsnetzes jeweils eine Halbbrücke mit jeweils zwei Dioden aufweist, ist die Frequenz der Spannungswelligkeit beispielsweise gleich dem Sechsfachen der Netzfrequenz. Bei einer einphasigen Speisung ist die Frequenz der Spannungswelligkeit beispielsweise gleich dem Doppelten der Netzfrequenz. Aus der Frequenz der Spannungswelligkeit kann somit direkt auf die Netzfrequenz geschlossen werden.

Für die Ermittlung der Frequenz der Spannungswelligkeit kann beispielsweise eine PLL (phase locked loop) verwendet werden. Falls die Zwischenkreisspannung große Signalanteile bei anderen Frequenzen enthält, können diese, soweit erforderlich, durch vorgeschaltete Filter entfernt werden. Auch ein Gleichanteil kann beispielsweise durch ein entsprechendes Hochpassfilter, Tiefpassfilter oder Bandpassfilter ausgefiltert werden. Alternativ zur Verwendung einer PLL kann natürlich auch eine Fouriertransformation der Zwischenkreisspannung erfolgen und die Lage des Leistungsdichte-Peaks beispielsweise im Bereich um das Sechsfache bzw. das Doppelte der nominalen Netzfrequenz herausgegriffen werden.

Vorzugsweise glättet oder filtert die Steuereinrichtung die ermittelte Zwischenkreisspannung, die an die Last ausgegebene Leistung oder die ermittelte Frequenz der Spannungswelligkeit. Dadurch wird die an die Last ausgegebene Leistung vergleichmäßigt. Zeitkonstanten der Glättung bzw. Filterung können im Bereich einer Netzperiode oder darüber liegen. Im Extremfall können sie im Bereich von bis zu mehreren Minuten liegen. Die Filter können einstellbar sein. Sie können weiterhin nach Bedarf analog oder digital realisiert sein. Ein typischer digitaler Filter ist ein Übertragungsglied erster Ordnung mit einem zurückgekoppelten Zustandsspeicher.

Es sind auch Umrichter bekannt, die zum Versorgungsnetz hin einen gesteuerten Gleichrichter, zur Last hin einen Wechselrichter und zwischen dem Gleichrichter und dem Wechselrichter einen Zwischenkreis aufweisen. In diesem Fall ermittelt die Steuereinrichtung unter Verwertung einer Zwischenkreisspannung des Zwischenkreises (und deren Abweichung von einem Sollwert) einen Aussteuergrad des Gleichrichters und anhand des Aussteuergrades Steuersignale für den Gleichrichter. Die Zwischenkreisspannung wird also auf einen festen Wert geregelt und ist daher nicht geeignet, daraus den Zustand des Versorgungsnetzes zu ermitteln. In diesem Fall kann die Steuereinrichtung jedoch den Zustand des Versorgungsnetzes anhand des Aussteuergrades und einer von dem Umrichter an die Last ausgegebenen Leistung ermitteln.

Der Aussteuergrad definiert ein Verhältnis zwischen der Netzspannung und der Zwischenkreisspannung. Die Berücksichtigung der an die Last ausgegebenen Leistung dient wie zuvor der Berücksichtigung von Spannungsabfällen an dem Gleichrichter und den Zuleitungen. Die ausgegebene Leistung kann von der Steuereinrichtung wie zuvor ermittelt werden. Auch die Art der Berücksichtigung kann wie zuvor erläutert erfolgen.

Bei Verwendung eines gesteuerten Gleichrichters umfasst der Umrichter in der Regel auch eine PLL. Die PLL synchronisiert sich auf das Versorgungsnetz. Die PLL ist erforderlich, weil die Ansteuerung des Gleichrichters auf das Versorgungsnetz synchronisiert sein muss. In diesem Fall nimmt die Steuereinrichtung ein Ausgangssignal der PLL entgegen. Sie ermittelt die Steuersignale für den Umrichter unter Verwendung des Ausgangssignals der PLL. Weiterhin ermittelt die Steuereinrichtung in diesem Fall den Zustand des Versorgungsnetzes anhand einer Frequenz des Ausgangssignals der PLL.

Zur Berücksichtigung des Zustands des Versorgungsnetzes ist es möglich, dass die Steuereinrichtung im Rahmen der Ermittlung der von dem Umrichter an die Last auszugebenden Leistung unter Verwertung des Zustands des Versorgungsnetzes einen Skalierungsfaktor ermittelt, durch Skalieren eines Leistungswertes mit dem Skalierungsfaktor einen Maximalwert ermittelt und die auszugebende Leistung, ausgehend von der gewünschten Leistung, auf den Maximalwert begrenzt.

Der Leistungswert kann ein fester Nominalwert sein. Diese Ausgestaltung weist den Vorteil auf, dass bei kleineren Leistungsanforderungen (also unterhalb des Maximalwertes) die gewünschte Leistung in vollem Umfang zur Verfügung gestellt wird, der Betrieb der Last also von den Schwankungen des Zustands des Versorgungsnetzes abgeschirmt wird. Alternativ kann der Leistungswert eine zu einem früheren Zeitpunkt von dem Umrichter an die Last ausgegebene Leistung sein. Diese Ausgestaltung weist den Vorteil auf, dass (nahezu) unabhängig von der konkret aus dem Versorgungsnetz bezogenen Leistung die Umrichtereinheit zur Stabilität des Versorgungsnetzes beiträgt. Der frühere Zeitpunkt weist vorzugsweise eine hinreichende Dauer auf, beispielsweise 1 Sekunde oder mehr.

Wenn die Skalierung einer zu einem früheren Zeitpunkt an die Last ausgegebenen Leistung erfolgt und die Vorgehensweise wiederholt ausgeführt wird, wird der Maximalwert immer weiter reduziert oder vergrößert. Sofern dies nicht erwünscht wird, sind verschiedene Lösungen möglich. Eine Möglichkeit besteht darin, die Anzahl an Iterationen zu begrenzen, beispielsweise die Begrenzung des Maximalwertes nur einmal oder nur zweimal vorzunehmen. Eine weitere Möglichkeit besteht darin, eine untere Grenze und eine obere Grenze vorzusehen, unter welche der Maximalwert nicht abgesenkt wird bzw. über die hinaus der Maximalwert nicht erhöht wird. Eine weitere Möglichkeit, die in der Praxis das gleiche Ergebnis erzielt, besteht darin, die erneute Begrenzung des Maximalwertes nach einer einmaligen Ausführung für eine längere Zeitdauer von beispielsweise 1 Stunde zu sperren. Eine weitere Möglichkeit besteht darin, dann, wenn der Maximalwert die untere Grenze erreicht und die Leistung noch weiter abgesenkt werden soll, den Betrieb des Umrichters völlig einzustellen, die Last also abzuschalten.

Vorzugsweise ermittelt die Steuereinrichtung eine Abweichung des Zustands des Versorgungsnetzes von einem Referenzzustand, vergleicht die Abweichung mit einem Schwellenwert und variiert den Maximalwert nur dann, wenn die Abweichung oder deren Betrag den Schwellenwert übersteigt. Anderenfalls bleibt der Maximalwert auf seinem aktuellen Wert. Ein Ausmaß, um welches der Maximalwert variiert wird, kann fest vorgegeben oder als Parameter einstellbar sein.

Die Aufgabe wird weiterhin durch ein Steuerprogramm mit den Merkmalen des Anspruchs 11 gelöst. Erfindungsgemäß veranlassen die Befehle die Steuereinrichtung dazu, ein erfindungsgemäßes Betriebsverfahren auszuführen.

Die Aufgabe wird weiterhin durch eine Steuereinrichtung mit den Merkmalen des Anspruchs 12 gelöst. Erfindungsgemäß ist eine Steuereinrichtung der eingangs genannten Art mit einem erfindungsgemäßen Steuerprogramm programmiert, so dass Befehle die die Steuereinrichtung veranlassen, ein erfindungsgemäße Betriebsverfahren auszuführen.

Die Aufgabe wird weiterhin durch eine Umrichtereinheit mit den Merkmalen des Anspruchs 13 gelöst. Erfindungsgemäß ist die Steuereinrichtung der Umrichtereinheit als erfindungsgemäße Steuereinrichtung ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1 ein Blockschaltbild,
FIG 2 ein Ablaufdiagramm,
FIG 3 mögliche Funktionsverläufe,
FIG 4 ein Ablaufdiagramm,
FIG 5 ein Blockschaltbild,
FIG 6 ein Ablaufdiagramm,
FIG 7 ein Ablaufdiagramm,
FIG 8 ein Ablaufdiagramm und
FIG 9 einen funktionalen Verlauf.

Gemäß FIG 1 weist eine Umrichtereinheit 1 einen Umrichter 2 auf, der eine Last 3 aus einem Versorgungsnetz 4 mit elektrischer Energie versorgt. Das Versorgungsnetz 4 ist in FIG 1 als dreiphasiges Drehstromnetz dargestellt. Dies stellt den Regelfall dar. Im Einzelfall könnte das Versorgungsnetz 4 aber auch mehr als drei Phasen oder nur eine einzige Phase aufweisen.

Der Umrichter 2 von FIG 1 ist als Zwischenkreisumrichter ausgebildet. Er weist also zum Versorgungsnetz 4 hin einen Gleichrichter 5, zur Last 3 hin einen Wechselrichter 6 und dazwischen einen Zwischenkreis 7 auf. Der Zwischenkreis 7 weist einen Zwischenkreiskondensator 8 auf. Dieser Aufbau des Umrichters 2 ist üblich. Er ist aber nicht für alle Ausgestaltungen der vorliegenden Erfindung zwingend. Der Gleichrichter 5 ist im Falle der Ausgestaltung des Umrichters 2 gemäß FIG 1 als ungesteuerter Diodengleichrichter ausgebildet. Innerhalb des Wechselrichters 6 sind als Halbleiter-Schaltelemente IGBTs dargestellt. Diese Ausgestaltung ist weit verbreitet, aber nicht zwingend. Die Halbleiter-Schaltelemente können beispielsweise auch als MOSFETs oder allgemein als Feldeffekttransistoren ausgebildet sein.

Der Umrichter 2 wird von einer Steuereinrichtung 9 der Umrichtereinheit 1 gesteuert. Die Steuereinrichtung 9 ist mit einem Steuerprogramm 10 programmiert. Das Steuerprogramm 10 umfasst Befehle 11, die von der Steuereinrichtung 9 ausführbar sind. Die Befehle 11 veranlassen die Steuereinrichtung 9 bei ihrer Ausführung durch die Steuereinrichtung 9 dazu, ein Betriebsverfahren auszuführen, das nachstehend näher erläutert wird. Die Programmierung der Steuereinrichtung 9 mit dem Steuerprogramm 10 bewirkt also, dass die Steuereinrichtung 9 ein derartiges Betriebsverfahren ausführt. Das Betriebsverfahren wird nachstehend in Verbindung mit FIG 2 erläutert.

Gemäß FIG 2 wird der Steuereinrichtung 9 in einem Schritt S1 eine gewünschte Leistung P1* der Last 3 bekannt. Die gewünschte Leistung P1* kann der Steuereinrichtung 9 beispielsweise von einer übergeordneten Einrichtung (nicht dargestellt) vorgegeben werden.

In einem Schritt S2 wird der Steuereinrichtung 9 eine Zwischenkreisspannung UZK bekannt. Die Zwischenkreisspannung UZK ist eine im Zwischenkreis 7 anfallende Spannung, genauer gesagt die über dem Zwischenkreiskondensator 8 abfallende Spannung. Die Zwischenkreisspannung UZK kann beispielsweise mittels eines Spannungssensors 12 messtechnisch erfasst und der Steuereinrichtung 9 zugeführt werden. Die Zwischenkreisspannung UZK ist also eine innerhalb des Zwischenkreises 7 erfasste Messgröße.

In einem Schritt S3 wird der Steuereinrichtung 9 eine Leistung P bekannt, die von dem Umrichter 2 aktuell an die Last 3 ausgegeben wird. Beispielsweise können ausgangsseitig des Umrichters 2 (also zur Last 3 hin) Phasenspannungen Ui und Phasenströme li erfasst und der Steuereinrichtung 9 zugeführt werden. Anhand der Phasenspannungen Ui und der Phasenströme li kann die Steuereinrichtung 9 in bekannter Art und Weise die aktuelle Leistung P ermitteln. Die Erfassung der Phasenspannungen Ui und der Phasenströme li ist üblicherweise sowieso vorhanden.

In einem Schritt S4 ermittelt die Steuereinrichtung 9 anhand der Zwischenkreisspannung UZK und der Leistung P einen Zustand Z des Versorgungsnetzes 3. Der Zustand Z ist im Falle der Ausgestaltung von FIG 2 die Netzspannung UN. Beispielsweise kann die Steuereinrichtung 9 die Netzspannung UN gemäß der Beziehung

$$\mathrm{UN} = \mathrm{k} \cdot \mathrm{UZK} + f1(P) \qquad (1)$$

ermitteln. k ist ein Anpassungsfaktor, der beispielsweise im Falle einer üblichen dreiphasigen Einspeisung den Wert $1/\sqrt{2}$ aufweist. f1 ist eine Funktion. Im einfachsten Fall ist f1 eine lineare Funktion (mit oder ohne konstanten Anteil). Im allereinfachsten Fall ist f(P) proportional zu P. Der zur Leistung P proportionale Anteil und gegebenenfalls auch der konstante Anteil können anhand von Datenblättern oder durch Versuche ermittelt werden. FIG 3 zeigt mögliche Verläufe der Funktion f1.

In einem Schritt S5 ermittelt die Steuereinrichtung 9 eine Leistung P2*, die von dem Umrichter 2 an die Last 3 ausgegeben werden soll. Die Steuereinrichtung 9 verwertet hierbei zum einen die gewünschte Leistung P1* und zum anderen den Zustand Z des Versorgungsnetzes 4, vorliegend also die ermittelte Netzspannung UN.

In einem Schritt S6 ermittelt die Steuereinrichtung 9 Steuersignale C für den Umrichter 2. Da gemäß der Ausgestaltung von FIG 1 der Gleichrichter 5 als ungesteuerter Gleichrichter ausgebildet ist, sind die Steuersignale C ausschließlich für den Wechselrichter 6 bestimmt. Die Ermittlung des Schrittes S6 erfolgt unter Verwertung der auszugebenden Leistung P2*. Die Ermittlung erfolgt derart, dass der Umrichter 2 die auszugebende Leistung P2* an die Last 3 ausgibt. Der Ermittlung des Schrittes S6 liegt auch die Zwischenkreisspannung UZK zu Grunde, da die Zwischenkreisspannung UZK das Ausmaß bestimmt, in welchem der Wechselrichter 6 ausgesteuert werden muss. In einem Schritt S7 steuert die Steuereinrichtung 9 den Umrichter 2 mit den Steuersignalen C an.

Es ist möglich, dass die Steuereinrichtung 9 die ermittelte Zwischenkreisspannung UZK und/oder die an die Last 3 ausgegebene Leistung P glättet oder filtert. Dies ist in FIG 2 in Schritten S8 und S9 angedeutet. Die Schritte S8 und S9 sind jedoch optional und daher in FIG 2 nur gestrichelt eingezeichnet.

FIG 4 zeigt eine zu FIG 2 alternative Ausgestaltung des Betriebsverfahrens. Dem Betriebsverfahren von FIG 4 liegt ebenfalls die in FIG 1 dargestellte Struktur des Umrichters 2 zu Grunde.

Gemäß FIG 4 wird der Steuereinrichtung 9 in einem Schritt S11 die gewünschte Leistung P1* der Last 3 bekannt. In einem Schritt S12 wird der Steuereinrichtung 9 die Zwischenkreisspannung UZK bekannt. Die Schritte S11 und S12 korrespondieren 1:1 mit den Schritten S1 und S2 von FIG 2.

In einem Schritt S13 ermittelt die Steuereinrichtung 9 anhand der Messgröße - also der Zwischenkreisspannung UZK - eine Frequenz fW einer Spannungswelligkeit der Zwischenkreisspannung UZK. Für die Ermittlung der Frequenz fW der Spannungswelligkeit der Zwischenkreisspannung UZK kann eine PLL verwendet werden. Es sind aber auch andere Vorgehensweisen möglich, beispielsweise eine Fourieranalyse.

Die Frequenz fW der Spannungswelligkeit der Zwischenkreisspannung UZK ist ein ganzzahliges Vielfaches der Netzfrequenz fN. Das Vielfache ist durch die Art des Versorgungsnetzes 4 bestimmt. Im Falle einer üblichen dreiphasigen Einspeisung ist die Frequenz fW der Spannungswelligkeit der Zwischenkreisspannung UZK beispielsweise das Sechsfache der Netzfrequenz fN. Die Steuereinrichtung 9 kann daher in einem Schritt S14 anhand der ermittelten Frequenz fW der Spannungswelligkeit direkt die Netzfrequenz fN ermitteln. Es muss lediglich die ermittelte Frequenz fW der Spannungswelligkeit durch das entsprechende Vielfache n dividiert werden. Der Zustand Z ist im Falle der Ausgestaltung von FIG 4 die Netzfrequenz fN.

In einem Schritt S15 ermittelt die Steuereinrichtung 9 die Leistung P2*, die von dem Umrichter 2 an die Last 3 ausgegeben werden soll. Die Steuereinrichtung 9 verwertet hierbei zum einen die gewünschte Leistung P1* und zum anderen den Zustand Z des Versorgungsnetzes 4, vorliegend also die ermittelte Netzfrequenz fN. Der Schritt S15 ist analog zum Schritt S5 von FIG 2.

In einem Schritt S16 ermittelt die Steuereinrichtung 9 die Steuersignale C für den Umrichter 2. In einem Schritt S17 steuert die Steuereinrichtung 9 den Umrichter 2 mit den Steuersignalen C an. Die Schritte S16 und S17 korrespondieren 1:1 mit den Schritten S6 und S7 von FIG 2.

Es ist möglich, dass die Steuereinrichtung 9 die ermittelte Frequenz fW der Spannungswelligkeit glättet oder filtert. Dies ist in FIG 4 in einem Schritt S18 angedeutet. Der Schritt S18 ist jedoch optional und daher in FIG 4 nur gestrichelt eingezeichnet.

FIG 5 zeigt eine weitere Ausgestaltung einer Umrichtereinheit 1. Die Umrichtereinheit 1 von FIG 5 weist ebenfalls einen Umrichter 2 auf, der eine Last 3 aus einem Versorgungsnetz 4 mit elektrischer Energie versorgt. Auch der Umrichter 2 von FIG 5 ist als Zwischenkreisumrichter ausgebildet. Er weist also zum Versorgungsnetz 4 hin einen Gleichrichter 5, zur Last 3 hin einen Wechselrichter 6 und dazwischen einen Zwischenkreis 7 auf. Der Zwischenkreis 7 weist einen Zwischenkreiskondensator 8 auf. Der Umrichter 2 wird von einer Steuereinrichtung 9 der Umrichtereinheit 1 gesteuert. Die Steuereinrichtung 9 ist mit einem Steuerprogramm 10 programmiert. Das Steuerprogramm 10 umfasst Befehle 11, die von der Steuereinrichtung 9 ausführbar sind. Insoweit wird auf die Ausführungen zu FIG 1 verwiesen

Im Gegensatz zur Ausgestaltung FIG 1 ist der Gleichrichter 5 von FIG 5 jedoch nicht als ungesteuerter Diodengleichrichter ausgebildet. Vielmehr handelt es sich bei dem Gleichrichter 5 von FIG 5 um einen gesteuerten Gleichrichter. Die Darstellung von FIG 5, gemäß der die gesteuerten Halbleiter-Schaltelemente des Gleichrichters 5 als Thyristoren ausgebildet sind, ist jedoch nur rein beispielhaft. Die Halbleiter-Schaltelemente könnten auch als IGBTs, als MOSFETs oder allgemein als Feldeffekttransistoren ausgebildet sein. Aufgrund der Ausgestaltung des Gleichrichters 5 als gesteuerter Gleichrichter ist weiterhin eine Ansteuerung des Gleichrichters 5 erforderlich, die mit der Netzfrequenz fN synchronisiert ist. Aus diesem Grund weist der Umrichter 2 eine PLL 13 auf. Die PLL 13 ist an das Versorgungsnetz 4 angekoppelt - in der Regel an zwei Phasen des Versorgungsnetzes 4 - und synchronisiert sich auf das Versorgungsnetz 4. Ein Ausgangssignal A der PLL 13 weist daher als Frequenz f die Netzfrequenz fN und weiterhin eine definierte Phasenlage relativ zum Versorgungsnetz 4 auf.

Weiterhin veranlassen die Befehle 11 die Steuereinrichtung 9 bei ihrer Ausführung durch die Steuereinrichtung 9 dazu, ein Betriebsverfahren auszuführen, das nachstehend in Verbindung mit FIG 6 näher erläutert wird. Die Programmierung der Steuereinrichtung 9 mit dem Steuerprogramm 10 bewirkt also, dass die Steuereinrichtung 9 ein derartiges Betriebsverfahren ausführt.

Gemäß FIG 6 wird der Steuereinrichtung 9 in einem Schritt S21 eine gewünschte Leistung P1* der Last 3 bekannt. In einem Schritt S22 wird der Steuereinrichtung 9 eine Zwischenkreisspannung UZK bekannt. In einem Schritt S23 wird der Steuereinrichtung 9 eine Leistung P bekannt, die von dem Umrichter 2 aktuell an die Last 3 ausgegeben wird. Die Schritte S21 bis S23 korrespondieren mit den Schritten S1 bis S3 von FIG 2.

In einem Schritt S24 vergleicht die Steuereinrichtung 9 die Zwischenkreisspannung UZK mit einem Sollwert UZK* für die Zwischenkreisspannung UZK. Entsprechend des Vergleichs führt die Steuereinrichtung 9 im Schritt S24 einen Aussteuergrad a für den Gleichrichter 5 nach. Der Schritt S24 implementiert also eine Regelung. Die Regelung kann beispielsweise eine P-, eine PI-, eine PID- oder eine andere Regelung sein. Hierbei stehen die Buchstaben P, I und D für proportional, integral und differenziell.

In einem Schritt S25 ermittelt die Steuereinrichtung 9 anhand des Aussteuergrades a und der Leistung P einen Zustand Z des Versorgungsnetzes 3. Der Zustand Z ist im Falle der Ausgestaltung von FIG 6 die Netzspannung UN. Beispielsweise kann die Steuereinrichtung 9 die Netzspannung UN gemäß der Beziehung

$$\mathrm{UN} = k \cdot \mathrm{a} \cdot \mathrm{UZK} + f2(P) \qquad (2)$$

ermitteln. k ist ein Anpassungsfaktor. f2 ist eine Funktion. Diesbezüglich wird auf die Ausführungen zur Funktion f1 von FIG 2 verwiesen.

In einem Schritt S26 ermittelt die Steuereinrichtung 9 eine Leistung P2*, die von dem Umrichter 2 an die Last 3 ausgegeben werden soll. Die Steuereinrichtung 9 verwertet hierbei zum einen die gewünschte Leistung P1* und zum anderen den Zustand Z des Versorgungsnetzes 4, vorliegend also die ermittelte Netzspannung UN. Der Schritt S26 korrespondiert mit dem Schritt S5 von FIG 2.

In einem Schritt S27 ermittelt die Steuereinrichtung 9 Steuersignale C1 für den Gleichrichter 5. Die Ermittlung erfolgt anhand des Aussteuergrades a. Der Aussteuergrad a liegt also der Ermittlung der Steuersignale C1 für den Gleichrichter 5 (und damit einen Teil des Umrichters 2) zu Grunde.

In einem Schritt S28 ermittelt die Steuereinrichtung 9 Steuersignale C2 für den Wechselrichter 6 (und damit einen weiteren Teil des Umrichters 2). Die Ermittlung des Schrittes S28 erfolgt unter Verwertung der auszugebenden Leistung P2*. Die Ermittlung erfolgt derart, dass der Umrichter 2 die auszugebende Leistung P2* an die Last 3 ausgibt. Der Ermittlung des Schrittes S28 liegt auch die Zwischenkreisspannung UZK zu Grunde, da die Zwischenkreisspannung UZK das Ausmaß bestimmt, in welchem der Wechselrichter 6 ausgesteuert werden muss. Aufgrund der entsprechenden Ermittlung des Aussteuergrades a und der entsprechenden Ansteuerung des Gleichrichters 5 kann die Zwischenkreisspannung UZK jedoch als konstant angesehen werden.

In einem Schritt S29 steuert die Steuereinrichtung 9 den Umrichter 2 mit den Steuersignalen C1, C2 an.

FIG 7 zeigt eine zu FIG 6 alternative Ausgestaltung des Betriebsverfahrens. Dem Betriebsverfahren von FIG 7 liegt ebenfalls die in FIG 5 dargestellte Struktur des Umrichters 2 zu Grunde.

Gemäß FIG 7 wird der Steuereinrichtung 9 in einem Schritt S31 die gewünschte Leistung P1* der Last 3 bekannt. Der Schritt S31 korrespondiert 1:1 mit dem Schritt S21 von FIG 6.

In einem Schritt S32 nimmt die Steuereinrichtung 9 das Ausgangssignal A der PLL 13 entgegen. Die Frequenz f des Ausgangssignals A korrespondiert direkt mit der Netzfrequenz fN. Die Steuereinrichtung 9 kann daher in einem Schritt S33 den Zustand Z des Versorgungsnetzes 4 direkt anhand der Frequenz f des Ausgangssignals A der PLL 13 ermitteln. Der Zustand Z ist im Falle der Ausgestaltung von FIG 7 die Netzfrequenz fN.

In einem Schritt S34 ermittelt die Steuereinrichtung 9 die Leistung P2*, die von dem Umrichter 2 an die Last 3 ausgegeben werden soll. Die Steuereinrichtung 9 verwertet hierbei zum einen die gewünschte Leistung P1* und zum anderen den Zustand Z des Versorgungsnetzes 4, vorliegend also die ermittelte Netzfrequenz fN. Der Schritt S34 ist analog zum Schritt S15 von FIG 4.

In einem Schritt S35 ermittelt die Steuereinrichtung 9 die Steuersignale C1 für den Gleichrichter 5. In einem Schritt S36 ermittelt die Steuereinrichtung 9 Steuersignale C2 für den Wechselrichter 6. In einem Schritt S37 steuert die Steuereinrichtung 9 den Umrichter 2 mit den Steuersignalen C1, C2 an. Die Schritte S35 bis S37 korrespondieren mit den Schritten S27 bis S29 von FIG 6.

Zur Implementierung des Schrittes S5 von FIG 2 bzw. der Schritte S15, S26 und S33 der FIG 4, 6 und 7 sind verschiedene Vorgehensweisen möglich.

Insbesondere ist es entsprechend der Darstellung in FIG 8 möglich, dass die Steuereinrichtung 9 im Rahmen der Ermittlung der von dem Umrichter 2 an die Last 3 auszugebenden Leistung P2* zunächst in einem Schritt S41 einen Skalierungsfaktor x ermittelt. f3 ist eine Funktion. Diesbezüglich wird wieder auf die Ausführungen zur Funktion f1 von FIG 2 verwiesen. Die Ermittlung des Skalierungsfaktors x erfolgt unter Verwertung des Zustands Z des Versorgungsnetzes 4. Beispielsweise kann die Steuereinrichtung 9 den Skalierungsfaktor x entsprechend der Darstellung in FIG 9 dadurch ermitteln, dass sie zunächst eine Abweichung δZ des Zustands Z des Versorgungsnetzes 4 von einem Referenzzustand Z* ermittelt, die Abweichung δZ (bzw. deren Betrag) mit einem Schwellenwert δZ0 vergleicht und den Skalierungsfaktor x nur dann auf einen von 1 verschiedenen Wert setzen, wenn die Abweichung δZ (oder deren Betrag) den Schwellenwert δZ0 übersteigt.

In einem Schritt S42 ermittelt die Steuereinrichtung 9 sodann einen Maximalwert PMAX für die auszugebende Leistung P2*. Die Ermittlung erfolgt durch Skalieren eines Leistungswertes PREF mit dem Skalierungsfaktor x. Der Leistungswert PREF kann ein fester Nominalwert sein (Nennleistung). In diesem Fall kann die Steuereinrichtung 9 den Maximalwert PMAX in jeder Iteration erneut ermitteln. Alternativ kann der Leistungswert PREF eine zu einem früheren Zeitpunkt von dem Umrichter 2 an die Last 3 ausgegebene Leistung sein. In diesem Fall kann der Leistungswert PREF auch einen (gegebenenfalls deutlich) kleineren Wert als der Nominalwert sein. Der Schritt S42 sollte daher bei dieser Ausgestaltung nicht bei jeder Iteration ausgeführt werden, sondern nur von Zeit zu Zeit. Der zeitliche Abstand zwischen unmittelbar aufeinanderfolgenden Ausführungen des Schrittes S42 kann relativ gering sein (im Bereich weniger Sekunden) oder auch einen größeren Wert aufweisen (eventuell sogar im Bereich von Stunden).

In einem Schritt S43 vergleicht die Steuereinrichtung 9 schließlich die gewünschte Leistung P1* mit dem Maximalwert PMAX. Übersteigt die gewünschte Leistung P1* den Maximalwert PMAX, so wird die auszugebenden Leistung P2* auf den Maximalwert PMAX begrenzt. Anderenfalls wird die auszugebenden Leistung P2* gleich der gewünschten Leistung P1* gesetzt.

Die vorliegende Erfindung weist viele Vorteile auf. Insbesondere werden für die Ermittlung des Zustands Z des Versorgungsnetzes 4 durch die Steuereinrichtung 9 nur Sensoren 12 und sonstige Einrichtungen 13 benötigt, die sowieso schon vorhanden sind. Durch die aktive Begrenzung der Leistung P2* trägt die Umrichtereinheit 1 bei kritischen Zuständen des Versorgungsnetzes 4 zur Netzstabilität bei.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Steuereinrichtung (9) eines Umrichters (2), der eine Last (3) aus einem Versorgungsnetz (4) mit elektrischer Energie versorgt,

   - wobei die Steuereinrichtung (9) unter Verwertung einer gewünschten Leistung (P1*) der Last (3) und eines Zustands (Z) des Versorgungsnetzes (4) eine von dem Umrichter (2) an die Last (3) auszugebende Leistung (P2*) ermittelt,
   - wobei die Steuereinrichtung (9) unter Verwertung der auszugebenden Leistung (P2*) Steuersignale (C, C1, C2) für den Umrichter (2) ermittelt und den Umrichter (2) mit den Steuersignalen (C, C1, C2) ansteuert, so dass der Umrichter (2) die auszugebende Leistung (P2*) an die Last (3) ausgibt,

   **dadurch gekennzeichnet,**
   **dass** die Steuereinrichtung (9) den Zustand (Z) des Versorgungsnetzes (4) unter Verwertung der Ermittlung der Steuersignale (C, C1, C2) zu Grunde liegender Größen (UZK, a, f) ermittelt.

2. Betriebsverfahren nach Anspruch 1,
   **dadurch gekennzeichnet,**
   **dass** der Umrichter (2) zum Versorgungsnetz (4) hin einen Gleichrichter (5), zur Last (3) hin einen Wechselrichter (6) und zwischen dem Gleichrichter (5) und dem Wechselrichter (6) einen Zwischenkreis (7) aufweist und dass die Größe (UZK, a, f) eine innerhalb des Zwischenkreises (7) erfasste Messgröße (UZK) ist.

3. Betriebsverfahren nach Anspruch 2,
   **dadurch gekennzeichnet,**
   **dass** die Messgröße (UZK) eine Zwischenkreisspannung (UZK) des Zwischenkreises (7) ist und dass die Steuereinrichtung (9) den Zustand (Z) des Versorgungsnetzes (4) anhand der Zwischenkreisspannung (UZK) und einer von dem Umrichter (2) an die Last (3) ausgegebenen Leistung (P) ermittelt.

4. Betriebsverfahren nach Anspruch 2,
   **dadurch gekennzeichnet,**
   **dass** der Zwischenkreis (7) einen Zwischenkreiskondensator (8) aufweist, dass die Messgröße (UZK) eine Zwischenkreisspannung (UZK) des Zwischenkreises (7) ist, dass die Steuereinrichtung (9) anhand der Messgröße (UZK) eine Frequenz (fW) einer Spannungswelligkeit der Zwischenkreisspannung (UZK) ermittelt und dass die Steuereinrichtung (9) den Zustand (Z) des Versorgungsnetzes (4) anhand der ermittelten Frequenz (fW) der Spannungswelligkeit ermittelt.

5. Betriebsverfahren nach Anspruch 3 oder 4,
**dadurch gekennzeichnet,**
**dass** die Steuereinrichtung (9) die ermittelte Zwischenkreisspannung (UZK), die an die Last (3) ausgegebene Leistung (P) oder die ermittelte Frequenz (fW) der Spannungswelligkeit glättet oder filtert.

6. Betriebsverfahren nach Anspruch 1,
**dadurch gekennzeichnet,**
**dass** der Umrichter (2) zum Versorgungsnetz (4) hin einen gesteuerten Gleichrichter (5), zur Last (3) hin einen Wechselrichter (6) und zwischen dem Gleichrichter (5) und dem Wechselrichter (6) einen Zwischenkreis (7) aufweist, dass die Steuereinrichtung (9) unter Verwertung einer Zwischenkreisspannung (UZK) des Zwischenkreises (7) einen Aussteuergrad (a) des Gleichrichters (5) ermittelt und anhand des Aussteuergrades (a) Steuersignale (C1, C2) für den Gleichrichter (5) ermittelt und dass die Steuereinrichtung (9) den Zustand (Z) des Versorgungsnetzes (4) anhand des Aussteuergrades (a) und einer von dem Umrichter (2) an die Last (3) ausgegebenen Leistung (P) ermittelt.

7. Betriebsverfahren nach Anspruch 1,
**dadurch gekennzeichnet,**
**dass** der Umrichter (2) zum Versorgungsnetz (4) hin einen gesteuerten Gleichrichter (5) aufweist, dass der Umrichter (2) eine PLL (13) umfasst, die sich auf das Versorgungsnetz (4) synchronisiert, dass die Steuereinrichtung (9) ein Ausgangssignal (A) der PLL (13) entgegennimmt, dass die Steuereinrichtung (9) die Steuersignale (C1, C2) für den Umrichter (2) unter Verwendung des Ausgangssignals (A) der PLL (13) ermittelt und dass die Steuereinrichtung (9) den Zustand (Z) des Versorgungsnetzes (4) anhand einer Frequenz (f) des Ausgangssignals (A) der PLL (13) ermittelt.

8. Betriebsverfahren nach einem der Ansprüche 1 bis 7,
**dadurch gekennzeichnet,**
**dass** die Steuereinrichtung (9) im Rahmen der Ermittlung der von dem Umrichter (2) an die Last (3) auszugebenden Leistung (P2*) unter Verwertung des Zustands (Z) des Versorgungsnetzes (4) einen Skalierungsfaktor (x) ermittelt, durch Skalieren eines Leistungswertes (PREF) mit dem Skalierungsfaktor (x) einen Maximalwert (PMAX) ermittelt und die auszugebende Leistung (P2*), ausgehend von der gewünschten Leistung (P1*), auf den Maximalwert (PMAX) begrenzt.

9. Betriebsverfahren nach Anspruch 8,
**dadurch gekennzeichnet,**
**dass** der Leistungswert (PREF) ein fester Nominalwert oder eine zu einem früheren Zeitpunkt von dem Umrichter (2) an die Last (3) ausgegebene Leistung (P) ist.

10. Betriebsverfahren nach Anspruch 8 oder 9,
**dadurch gekennzeichnet,**
**dass** die Steuereinrichtung (9) eine Abweichung (δZ) des Zustands (Z) des Versorgungsnetzes (4) von einem Referenzzustand (Z*) ermittelt, die Abweichung (δZ) mit einem Schwellenwert (δZ0) vergleicht und den Maximalwert (PMAX) nur dann variiert, wenn die Abweichung (δZ) oder deren Betrag den Schwellenwert (δZ0) übersteigt.

11. Steuerprogramm für eine Steuereinrichtung (9), welche einen Umrichter (2) steuert, der eine Last (3) aus einem Versorgungsnetz (4) mit elektrischer Energie versorgt, wobei das Steuerprogramm Befehle (11) umfasst, die bei ihrer Ausführung durch die Steuereinrichtung (9) die Steuereinrichtung (9) veranlassen, ein Betriebsverfahren nach einem der obigen Ansprüche auszuführen.

12. Steuereinrichtung für einen Umrichter (2), der eine Last (3) aus einem Versorgungsnetz (4) mit elektrischer Energie versorgt, wobei die Steuereinrichtung mit einem Steuerprogramm (10) nach Anspruch 11 programmiert ist, so dass die Steuereinrichtung ein Betriebsverfahren nach einem der Ansprüche 1 bis 10 ausführt.

13. Umrichtereinheit,

- wobei die Umrichtereinheit einen Umrichter (2) aufweist, der eine Last (3) aus einem Versorgungsnetz (4) mit elektrischer Energie versorgt,
- wobei die Umrichtereinheit eine Steuereinrichtung (9) aufweist, welche den Umrichter (2) steuert,
- wobei die Steuereinrichtung (9) als Steuereinrichtung (9) nach Anspruch 12 ausgebildet ist.

FIG 1

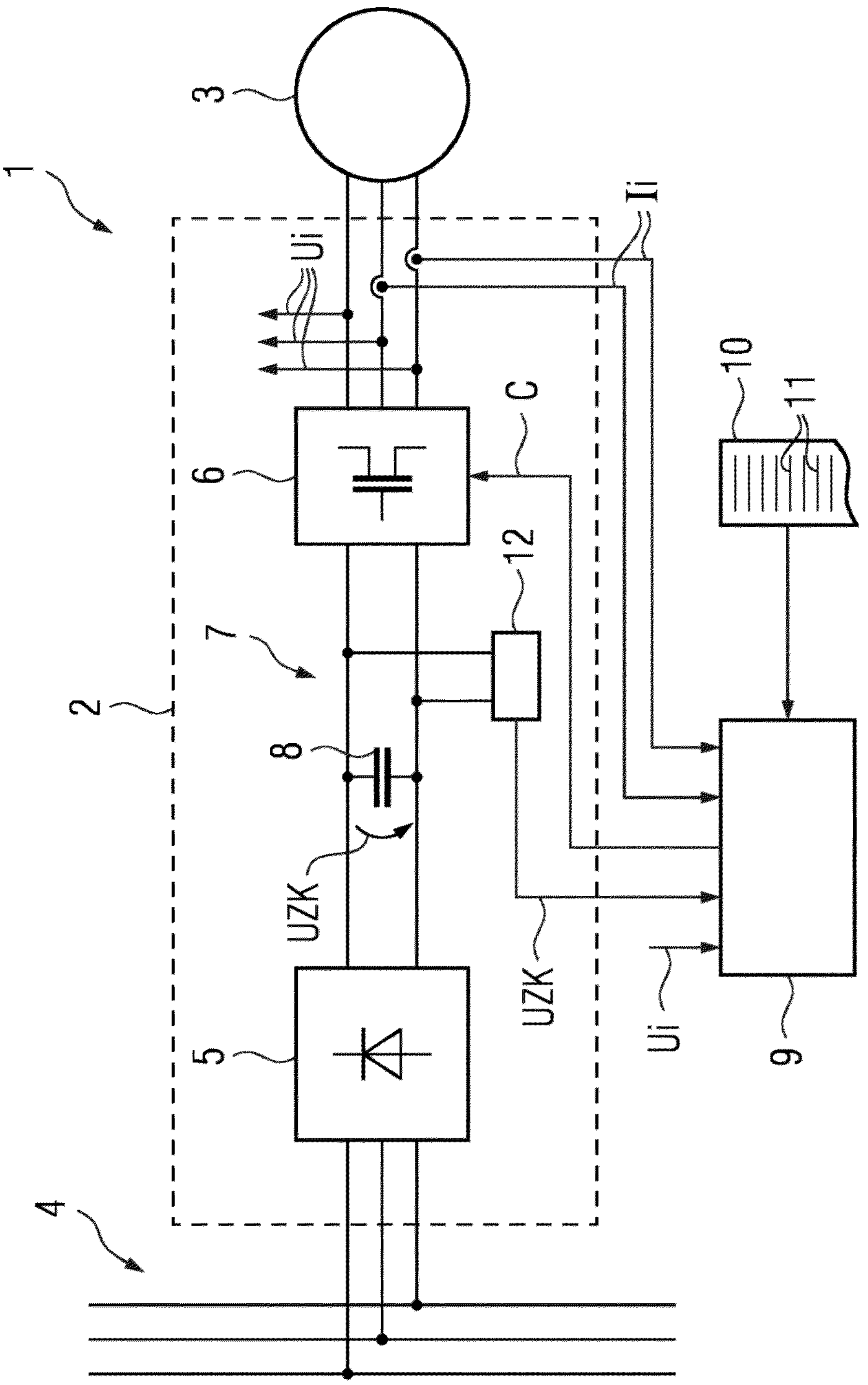

FIG 2

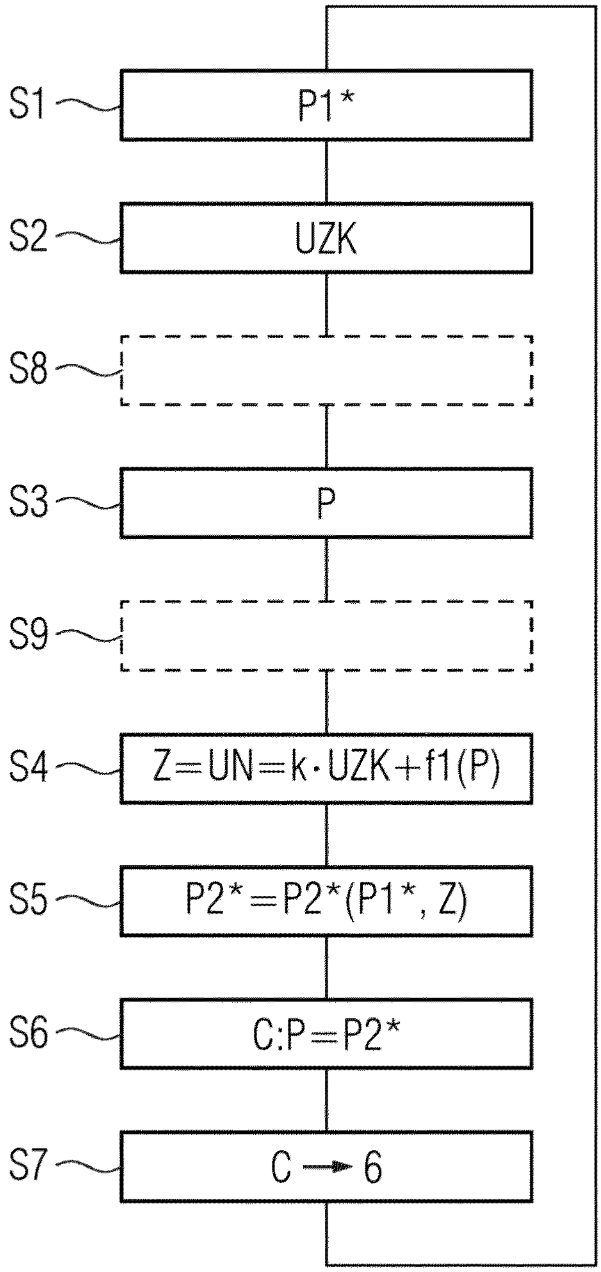

FIG 3

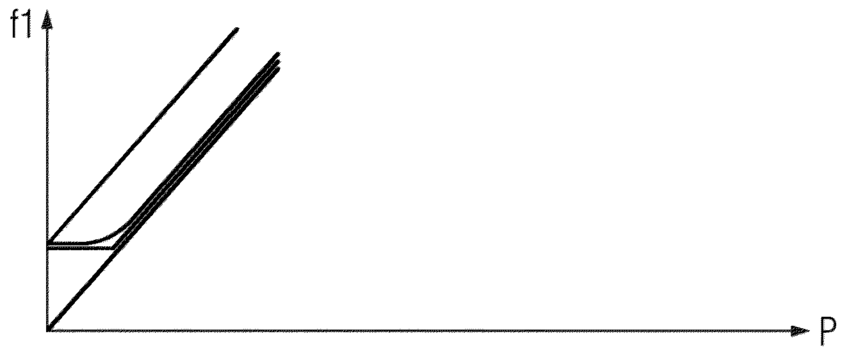
f1
P

FIG 4

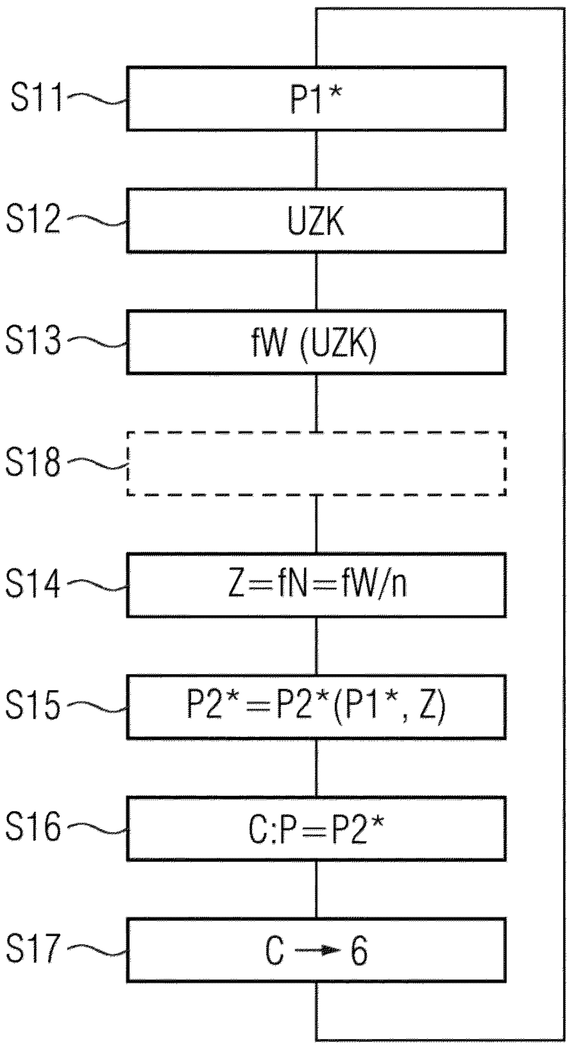
S11
P1*
S12
UZK
S13
fW (UZK)
S18
S14
Z=fN=fW/n
S15
P2*=P2*(P1*, Z)
S16
C:P=P2*
S17
C → 6

FIG 5

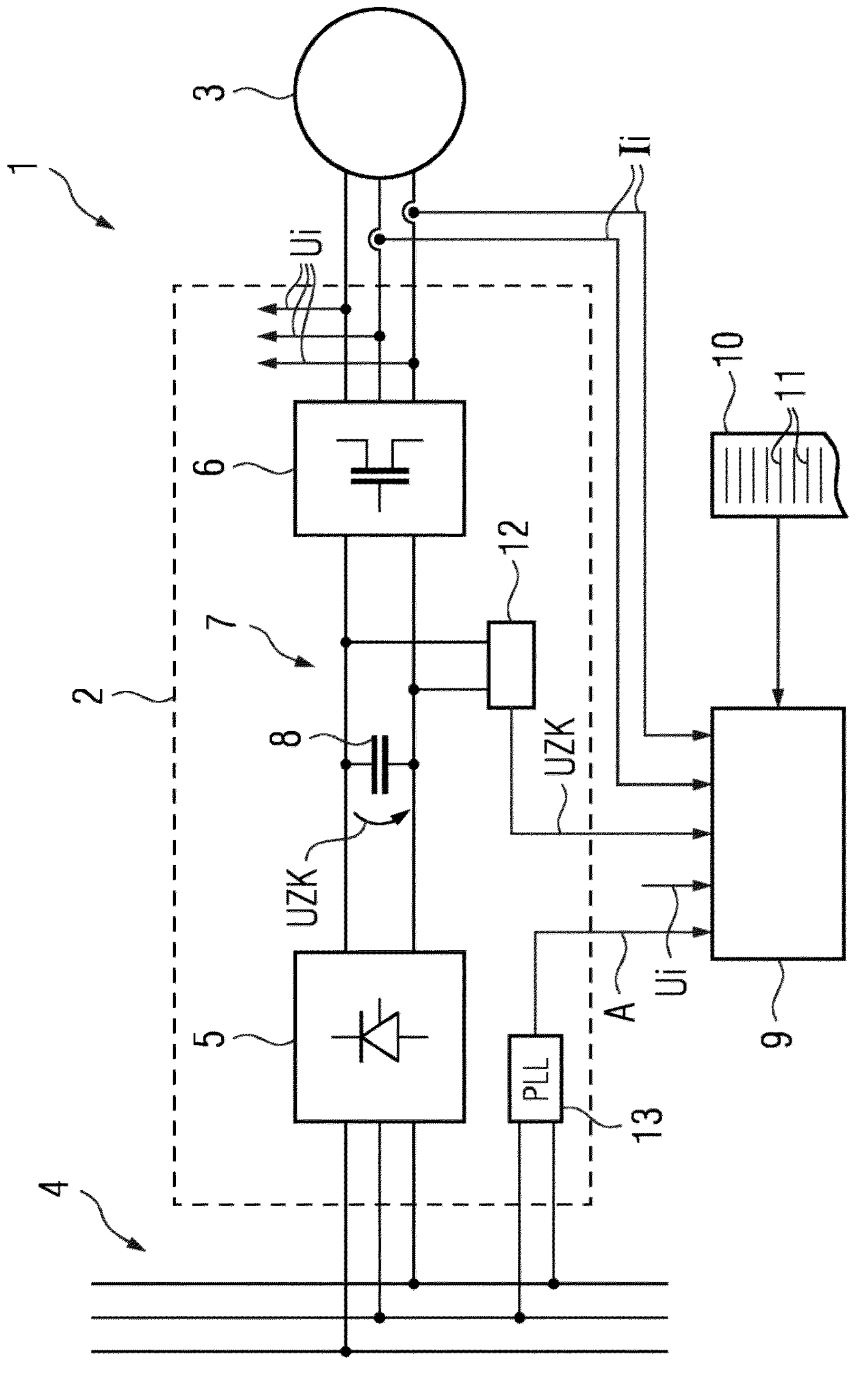

FIG 6

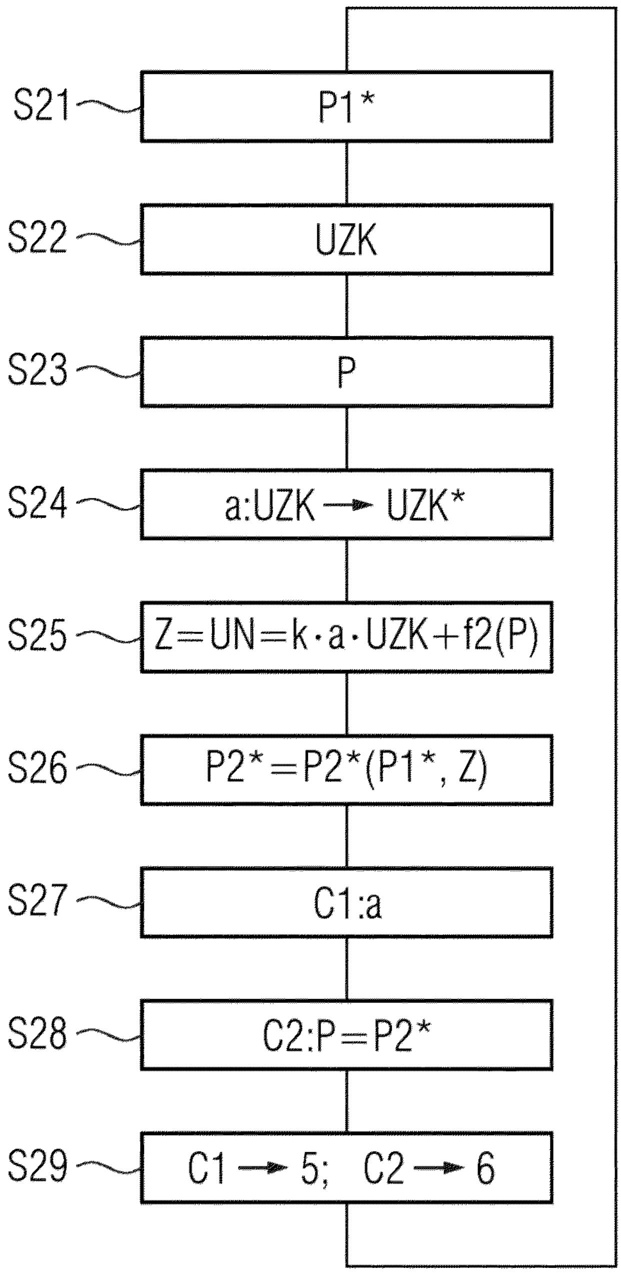
S21
P1*
S22
UZK
S23
P
S24
a:UZK → UZK*
S25
Z=UN=k·a·UZK+f2(P)
S26
P2*=P2*(P1*, Z)
S27
C1:a
S28
C2:P=P2*
S29
C1 → 5; C2 → 6

FIG 7

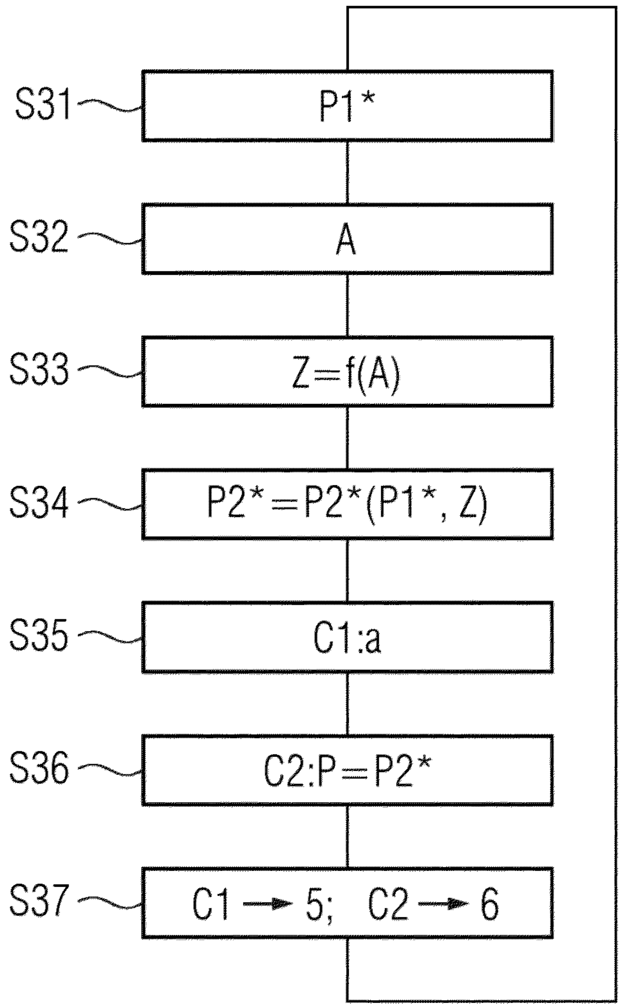

FIG 8

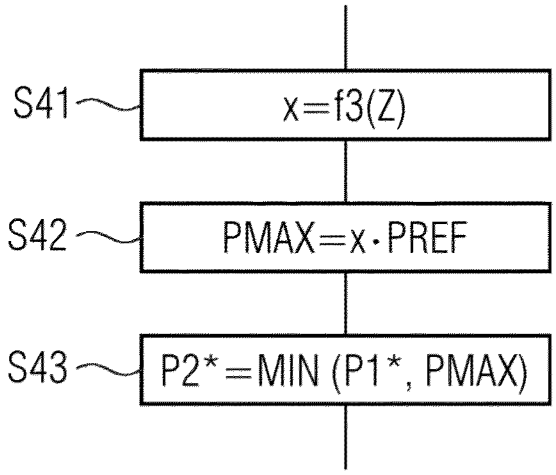


FIG 9

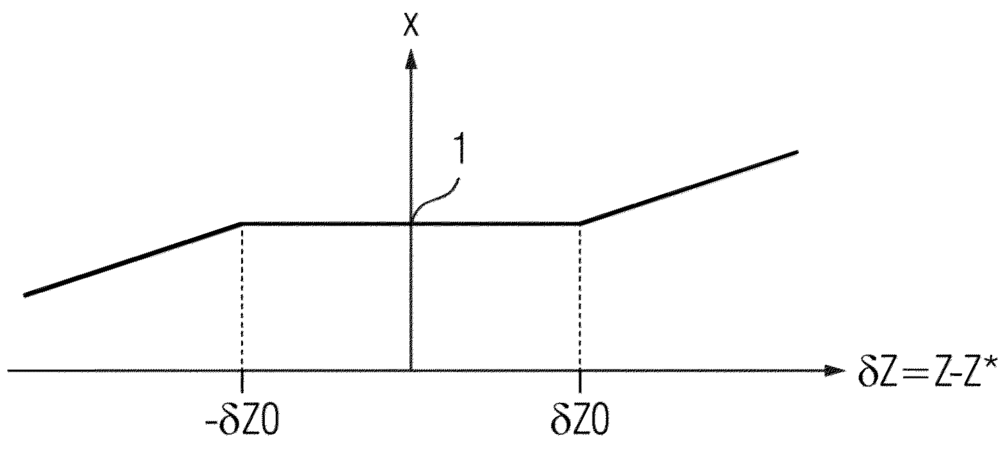

Europäisches Patentamt
European Patent Office
Office européen des brevets

# EUROPÄISCHER RECHERCHENBERICHT

Nummer der Anmeldung
EP 24 19 2860

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 112 582 994 A (NARI RELAYS ELECTRIC CO LTD; NANJING NARI RELAYS ENG TECH) 30. März 2021 (2021-03-30) * text corresponding to the figures 1-3; Abbildungen 1-3 * | 1-13 | INV. H02M7/5387 H02M5/458 H02M1/00 H02J3/12 |
| X | CN 111 953 012 A (CHINA ELECTRIC POWER RES INST CO LTD) 17. November 2020 (2020-11-17) * Abbildungen 1-7 * | 1-13 | |
| A | Diao El Hadji Sidath: "4.3 Observer for the DC link voltage" In: "Fault Tolerant Control for Critical machine-inverter systems used in automotive industry", 31. Dezember 2015 (2015-12-31), Université Paris Sud - Paris XI, XP093241638, Seiten 155-159, Gefunden im Internet: URL:https://theses.hal.science/tel-01127062/> * Kapitel 4.3; Seite 155 - Seite 158 * | 1-13 | RECHERCHIERTE SACHGEBIETE (IPC) H02M H02J |

Der vorliegende Recherchenbericht wurde für alle Patentansprüche erstellt

| Recherchenort | Abschlußdatum der Recherche | Prüfer |
|---|---|---|
| Den Haag | 21. Januar 2025 | Zeljkovic, Sandra |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 24 19 2860

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2025

| Im Recherchenbericht angeführtes Patentdokument | Datum der Veröffentlichung | Mitglied(er) der Patentfamilie | Datum der Veröffentlichung |
|---|---|---|---|
| CN 112582994 A | 30-03-2021 | KEINE | |
| CN 111953012 A | 17-11-2020 | KEINE | |

EPO FORM P0461

Für nähere Einzelheiten zu diesem Anhang : siehe Amtsblatt des Europäischen Patentamts, Nr.12/82